# EUROPEAN PATENT APPLICATION

(11) **EP 1 804 276 A2**
(43) Date of publication of application: **04.07.2007**
(21) Application number: 06126555.9
(22) Date of filing: 19.12.2006
(51) Int. Cl.: H01J 61/18, H01J 61/70, H01J 61/44

(54) **Mercury-free discharge compositions and lamps incorporating gallium**

(30) Priority: 29.12.2005 US 322038
(71) Applicant: General Electric Company, Schenectady, NY 12345 (US)
(72) Inventor: Srivastava, Alok Mani, Niskayuna, NY 12309 (US); Sommerer, Timothy John, Ballston Spa, NY 12020 (US); Smith, David John, Clifton Park, NY 12065 (US); Michael, Joseph Darryl, Schoharie, NY 12157 (US); Beers, William Winder, Chesterland, OH 44026 (US); Comanzo, Holly Ann, Niskayuna, NY 12309 (US); Kumar, Prasanth Nammalwar, AECS Layout Brookfields 560037,Bangalore (IN); Ramachandran, Gopi, 560037, Bangalore (IN); Shankar, Madras Venugopal, Brookfield 560037, Bangalore (IN); Hanumantha, Ravikumar, 560072, Bangalore (IN)
(74) Representative: Illingworth-Law, William Illingworth

(57) **Abstract**

A mercury-free discharge composition may be provided. The ionizable mercury-free discharge composition may include gallium and a halogen. The composition may be capable of emitting radiation if excited, and the composition may produce a total equilibrium operating pressure less than about 100,000 Pascals if excited. A mercury-free discharge lamp (20) may be provided. The mercury-free discharge lamp may include an envelope (22); an ionizable discharge composition including gallium contained by the envelope (22); and a phosphor composition contained by the envelope (22) and in communication with the ionizable discharge composition.

## Description

### BACKGROUND

Ionizable discharge compositions may be used in discharge sources such as a discharge lamp. In a discharge lamp, radiation may be produced by an electric discharge in a discharge medium. Typically, the discharge medium may be in a gas or a vapor phase and may be contained by an envelope capable of transmitting the generated radiation out of the envelope. The discharge medium may be ionized through application of an electric field across a pair of electrodes placed within the envelope and in contact with the medium. As the ionized atoms and molecules relax to a lower energy state, they emit radiation. Most of the currently used discharge radiation sources contain mercury as a component of the ionizable discharge medium due to its efficient discharge characteristics. Disposal of such mercury-containing radiation sources may be potentially harmful to the environment. Therefore, there is a need to develop a mercury-free discharge composition and a lamp with improved efficiency.

### BRIEF DESCRIPTION

In one embodiment of the invention, an ionizable mercury-free discharge composition (herein after "mercury-free discharge composition") is provided. The mercury-free discharge composition may include gallium and a halogen. The composition may be capable of emitting radiation if excited, and the composition may produce a total equilibrium operating pressure of less than about 100,000 Pascals if excited.

In another embodiment of the invention, a mercury-free discharge lamp may be provided. The mercury-free discharge lamp may include an envelope; an ionizable discharge composition including gallium contained by the envelope; and a phosphor composition contained by the envelope and in communication with the ionizable discharge composition.

### BRIEF DESCRIPTION OF THE DRAWINGS

These and other features, aspects, and advantages of embodiments of the present invention will become better understood when the following detailed description, provided by way of example, is read with reference to the accompanying drawings in which like characters represent like parts throughout the drawings, wherein:
FIG. 1 is a plot of dose mass per surface area versus ratio of iodine to gallium for a gallium-iodide based discharge composition, according to one embodiment of the invention;
FIG. 2 is a mercury-free discharge lamp according to one embodiment of the present invention;
FIG. 3 is a mercury-free discharge lamp according to another embodiment of the present invention;
FIG. 4 is a mercury-free discharge lamp according to yet another embodiment of the radiation source of the present invention;
FIG. 5 is an emission spectrum of a mercury-free discharge composition according to one embodiment of the present invention;
FIG. 6 is an emission spectrum of a mercury-free discharge composition according to another embodiment of the present invention;
FIG. 7 is a plot of temperature variation of efficiency for different mercury-free discharge compositions, according to one embodiment of the invention; and
FIG. 8 is a plot of emission spectra of Sr_{1.66}Ca_{0.3}Si_{0.96}Eu_{0.04}O_{3.92}, according to one embodiment of the invention.

### DETAILED DESCRIPTION

In general, embodiments of the present invention include mercury-free discharge compositions and radiation sources that incorporate such compositions.

In the following description, like reference characters designate like or corresponding parts throughout the several views shown in the figures.

As used herein, the term 'phosphor composition' may simply refer to a single phosphor or may refer to a blend of phosphors or to a blend of materials including at least one phosphor. Furthermore, the terms 'discharge lamp' and 'radiation source' may be used interchangeably herein. The radiation source may include a fluorescent lamp, an excimer lamp, a flat fluorescent lamp, a miniature gas laser or the like. As used herein, the term "red emitting phosphor" is intended to refer to a phosphor composition that emits radiation in the red wavelength range of the visible spectra, "a green emitting phosphor" is a phosphor composition that emits radiation in the green wavelength range, and a "blue emitting phosphor" is a phosphor composition that emits radiation in the blue wavelength range. For example, a red emitting phosphor may emit radiation having a peak emission wavelength of about 600 nm to about 650 nm, a green emitting phosphor may emit radiation having an emission wavelength of about 510 nm to about 560 nm, and a blue emitting phosphor may emit radiation having an emission wavelength of about 420 nm to about 470 nm. Chemical formulae are used to represent materials in such a way that, whenever more than two elements are included within a parenthesis, it implies that at least one of the elements need to be present in the material.

Mercury-based ionizable discharge compositions are extensively used in radiation sources such as discharge lamps due to the high efficiency of the discharge compositions in generating radiation. However, due to potential health concerns associated with mercury exposure, more and more efforts have been directed towards development of mercury-free discharge compositions. More specifically, research efforts have focused on identification and development of a mercury-free discharge composition having an equally efficient or more efficient discharge as compared to that of mercury-containing compositions. However, finding a mercury-free discharge composition with good efficiency has proven to be a very challenging task. In accordance with aspects of the present invention, it has been determined that gallium-based ionization compositions show good efficiency and are suitable for use as a mercury-free discharge composition in radiation sources. The details of such mercury-free discharge compositions, compatible phosphor compositions, and optimization details are described in the subsequent embodiments.

Referring to the drawings in general, it will be understood that the illustrations are intended for the purpose of describing embodiments of the invention and are not intended to limit the invention thereto.

In accordance with one aspect of the invention, a mercury-free discharge composition capable of emitting radiation when excited is provided. In one embodiment, the mercury-free discharge composition may include gallium and a halogen. The halogen may include chlorine, bromine, iodine, or combinations of these materials. Accordingly, in one embodiment, the mercury-free discharge composition may include gallium iodide. In another embodiment, the mercury-free discharge composition may include gallium chloride, while in yet another embodiment, the mercury-free discharge composition may include gallium bromide. In one embodiment, the mercury-free discharge composition may include a mixture of two or more of gallium halides. Gallium and halogen may be present along with any other element or compound other than mercury and mercury containing compounds. In one embodiment, the ionizable mercury-free discharge composition may be sodium-free.

As mentioned above, the mercury-free discharge composition may be capable of emitting radiation when excited. Upon excitation, the mercury-free discharge material may dissociate and form into different species depending on the energy available for the reactions. The different species may include ions, atoms, electrons, molecules or any other free radicals. At any given instant during discharge, the discharge composition may be a combination of these species. For example, in a mercury-free discharge composition including gallium and iodine, upon excitation, the discharge composition may include a mixture of metallic gallium, gallium ions, iodide ions, GaI, GaI₂, or GaI₃, electrons, and various combinations of these species. The amount of each of these species may depend on the amount of discharge material, internal pressure, and temperature during operation. These dissociative/ formation reactions may be reversible and may occur constantly or otherwise repeatedly under steady state conditions. Thus the emission spectra from the emitted radiation of the mercury-free discharge composition may be tuned and hence optimized for increased efficiency by changing one or more characteristics of the discharge lamp. For example, the amount of discharge material introduced into the envelope could be changed, the pressure within the discharge envelope could be changed, and the temperature of the discharge composition during discharge could be changed. Apart from these parameters, various other factors such as the current density, lamp radius, getters, complexing additives, and other parameters may be tuned to optimize the efficiency of the discharge.

The mercury-free discharge composition may further include an inert buffer gas. The inert buffer gas may include helium, neon, argon, krypton, xenon, or combinations thereof. The inert buffer gas may enable or otherwise facilitate the gas discharge to be more readily ignited. The inert buffer gas may also control the steady state operation of the radiation source, and may further be used to optimize operation of the radiation source. In a non-limiting example, argon may be used as the inert buffer gas. However, argon may be substituted, either completely or partly, with one or more other inert gasses, such as helium, neon, krypton, xenon, or combinations thereof.

In one embodiment, the mercury-free discharge composition may produce a total equilibrium operating pressure of less than about 100,000 Pascals when excited. In another embodiment, the composition may produce a total equilibrium operating pressure of less than about 10,000 Pascals when excited. In yet another embodiment, the composition may produce a total equilibrium operating pressure of less than about 2000 Pascals when excited. In one embodiment, the mercury-free discharge lamp has a total equilibrium operating pressure in the range of about 20 Pascals to about 2000 Pascals. In another embodiment, the mercury-free discharge lamp has a total equilibrium operating pressure of about 1000 Pascals.

As noted above, optimizing the discharge composition through e.g., adjustment of the internal pressure of the discharge envelope, the amount of discharge material within the envelope, and temperature of the discharge composition may improve the efficiency of discharge radiation during operation. Such optimization may be effected by controlling the partial pressure of gallium and gallium compounds present within the discharge composition such as GaI, GaI₂, or GaI₃, or by controlling the pressure of the inert buffer gas, or both together. Moreover, in accordance with teachings of the present invention, it has been determined that an increase in the luminous efficacy of a device incorporating the mercury-free discharge composition described herein may be achieved by controlling the operating temperature of the discharge. The luminous efficacy, expressed in lumen/Watt, is the ratio between the brightness of the radiation in a specific visible wavelength range and the energy used to generate the radiation.

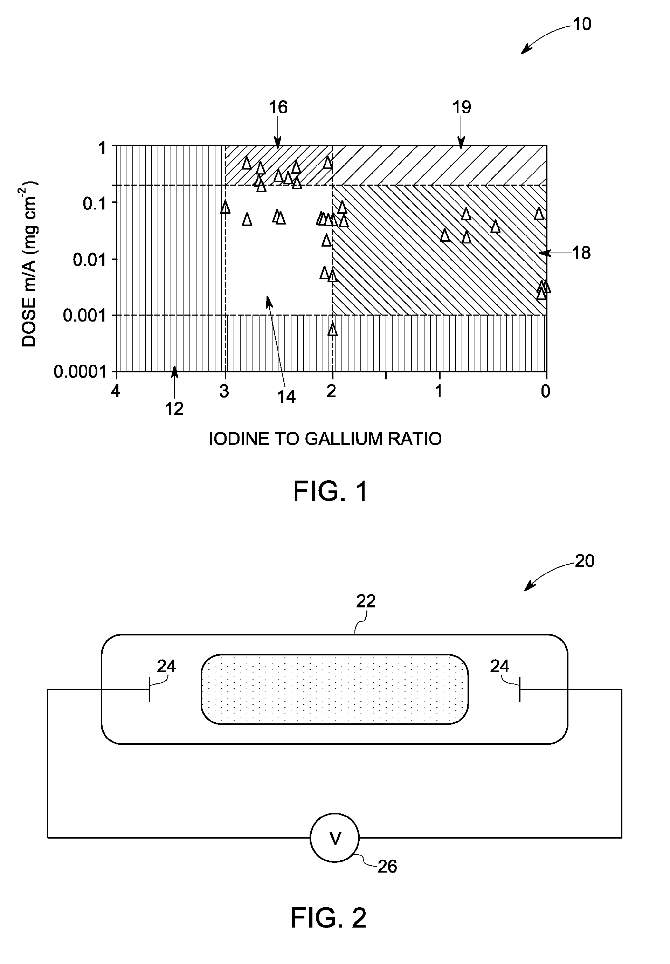

It has further been determined that by tailoring the ratio of gallium to the halogen, it is possible to tune the discharge characteristics of the discharge composition. For example, the results of the efficiency testing on discharge lamps with different discharge compositions, according to some embodiments of the inventions, is shown in FIG. 1. Plot 10 illustrates a relationship between a dose mass per surface area of the discharge composition versus the ratio of iodine to gallium for a gallium-iodide based discharge composition, according to one embodiment of the invention. The discharge characteristics may typically vary depending on the dose amount and the ratio of gallium to iodine. For example, region 12 describes that area of plot 10 where the dose is less than 0.001 milligrams cm⁻² and/or the ratio of the gallium to the halogen is greater than 1:3. In region 12, the efficiency may be low (e.g., less than 10%). However, in region 14, when the ratio of gallium to iodine in the discharge composition is between 1:3 to 1:2 and the dose amount is between 0.1 milligrams/cm² mg/cm² and 0.001 milligrams/cm², it is believed that the surface phase species are in thermochemical equilibrium, which may lead to a "low temperature (e.g., 90°C-130°C) high efficiency (e.g., efficiency greater than about 25%)" mode of operation. In region 16, when the ratio of gallium to iodine in the discharge composition is between 1:3 to 1:2 and the dose amount is greater than 0.1 milligrams/cm², the system may be in the "low temperature medium efficiency (e.g. efficiency between about 10% to about 25%)" mode of operation, and in region 18 of FIG. 1, when the ratio of gallium to iodine is higher than 1:2 and the dose amount is between 0.1 milligrams/cm² and 0.001 milligrams/cm², the system may be driven into "high temperature (e.g., 180°C-200°C) high efficiency" mode of operation or "high temperature medium efficiency" mode of operation (within region 19 when the ratio of gallium to iodine is higher than 1:2 and the dose amount is greater than 0.1 milligrams/cm²). Accordingly, in one embodiment the molar ratio of gallium to the halogen may be in the range of from about 1:3 to about 1:2. Further, the amount of discharge material within the chamber may be optimized to improve the efficiency of discharge. In one embodiment, the dosage may be less than about 0.04 mg/cm². In another embodiment, the dosage may be in the range of from about 0.001 mg/cm² to about 0.005 mg/cm² in the absence of electrodes within the envelope.

In accordance with another aspect of the invention, a mercury-free discharge lamp is provided. The mercury-free discharge lamp may include, an envelope, an ionizable discharge composition including gallium contained by the envelope, and a phosphor composition contained by the envelope and in communication with the ionizable discharge composition. FIG. 2 schematically illustrates one such mercury-free discharge lamp 20. FIG. 2 shows a tubular vessel or envelope 22 containing an ionizable mercury-free discharge composition according to one embodiment of the invention. The envelope 22 may be transparent, semi-transparent or opaque. In one embodiment, the envelope 22 may be a substantially transparent material. The term "substantially transparent" means allowing a total transmission of at least about 50 percent, preferably at least about 75 percent, and more preferably at least about 90 percent, of the incident radiation within about 10 degrees of a perpendicular to a tangent drawn at any point on the surface of the envelope. The envelope 22 may have a circular or a non-circular cross section, and need not be straight.

In one embodiment, the discharge may be desirably excited by a plurality of thermionically emitting electrodes 24 connected to a voltage source 26. The discharge may also be generated by other methods of excitation that provide energy to the composition such as capacitive coupling. It is within the scope of this invention that various waveforms of voltage and current, including alternating or direct, are contemplated for use in providing excitation to the discharge medium. It is also within the scope of this invention that additional voltage sources may also be present to help maintain the electrodes at a temperature sufficient for thermionic emission of electrons. Additionally, a phosphor composition may be coated on the inner surface of the envelope 22. Alternatively, the phosphor composition may be applied to the outside of the radiation source envelope provided that the envelope is not made of any material that absorbs a significant amount of the radiation emitted by the discharge. A suitable material for this embodiment is quartz, which absorbs little radiation in the UV spectrum range. The phosphor layer coatings in discharge lamps may be formed by various already known procedures including deposition from liquid suspensions and electrostatic deposition. For example, the phosphor may be deposited on the envelope surface from a conventional aqueous suspension including various organic binders and adhesion promoting agents. The aqueous suspension may be applied and then dried in the conventional manner.

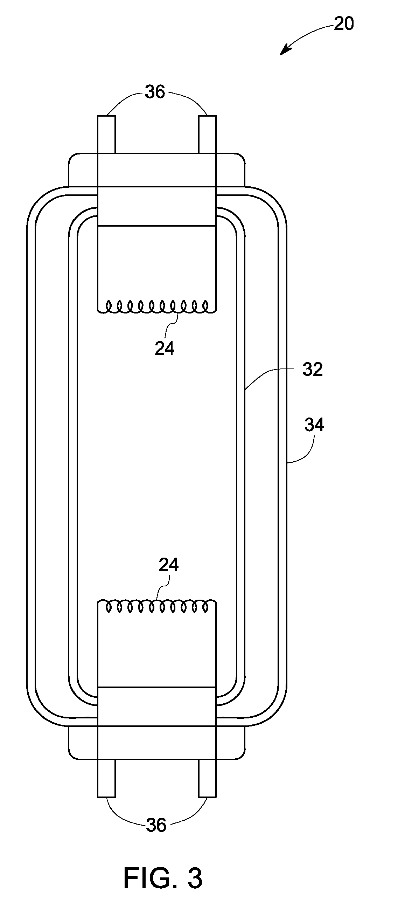

FIG. 3 schematically illustrates another embodiment of a mercury-free discharge lamp 20. The envelope may include an inner envelope 32 and an outer envelope 34. The mercury-free discharge lamp may be connected to an external voltage source through a set of external electrodes 36. The space between the two envelopes may be either evacuated or filled with a gas. In such embodiments a phosphor composition may be coated on the outer surface of the inner envelope and/or the inner surface of the outer envelope. The evacuated space between the envelopes may ensure that the phosphor composition is not exposed to high temperature during operation. The double walled envelope may be required to thermally insulate the inner tube to allow it to reach the desired operating temperature in instances where the input power density is insufficient to heat the wall to the desired operating temperature in the ambient.

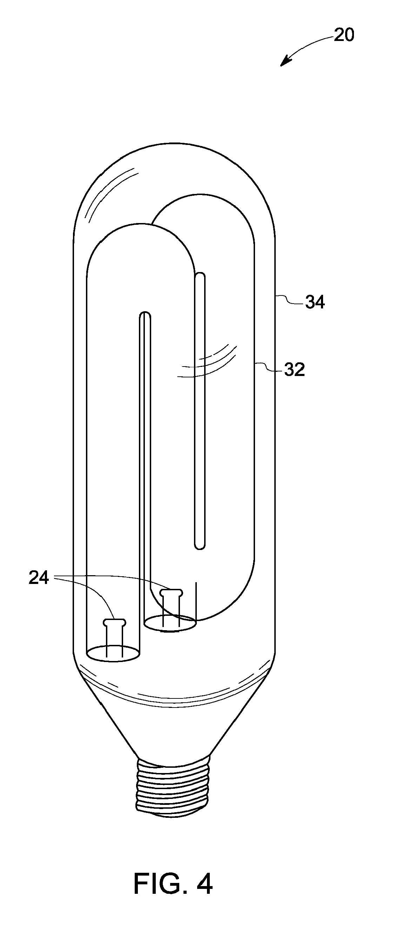

The mercury-free discharge lamp envelope may alternatively be embodied so as to be a multiple-bent tube with inner envelope 32 surrounded by an outer envelope or bulb 34 as shown in FIG. 4. The lamp configuration may have a form factor of a compact fluorescent lamp and may be chosen for realizing a low temperature operation of the lamp in order to minimize the color change that may occur due to heating of the phosphor composition.

In accordance with one aspect of the present invention, a discharge lamp is provided with a means for generating and maintaining a gas discharge. In an embodiment, the means for generating and maintaining a discharge are electrodes disposed at two points of a discharge lamp housing or envelope and a voltage source providing a voltage to the electrodes. In one embodiment, the electrodes may be hermetically sealed within the envelope. In another embodiment, the discharge lamp may be electrodeless. In another embodiment of an electrodeless discharge lamp, the means for generating and maintaining a discharge is an emitter of radio frequency present outside or inside the envelope containing the ionizable composition.

In still another embodiment of the present invention, the ionizable composition is capacitively excited with a high frequency field, the electrodes being provided on the outside of the gas discharge vessel. In still another embodiment of the present invention, the ionizable composition is inductively excited using a high frequency field.

Mercury-free gallium halide based discharge compositions described herein have spectral transitions at different wavelengths than that of the mercury-based discharge compositions. In accordance with another aspect of the invention, phosphor compositions are provided that are suitable for use in radiation sources such as a discharge lamp incorporating the ionizable mercury-free gallium halide discharge composition described herein. In one embodiment, the phosphor compositions may be placed in communication with the discharge composition to absorb at least a portion of the radiation emitted by the discharge composition at one wavelength and to emit radiation of a different wavelength. The chemical composition of the phosphor may determine the spectrum of the radiation emitted. In particular, a phosphor composition used in a discharge lamp incorporating the gallium halide discharge composition may be configured to absorb radiation in the UV and visible ranges and emit in the visible wavelength ranges, such as in the red, blue and green wavelength range, and enable a high fluorescence quantum yield to be achieved.

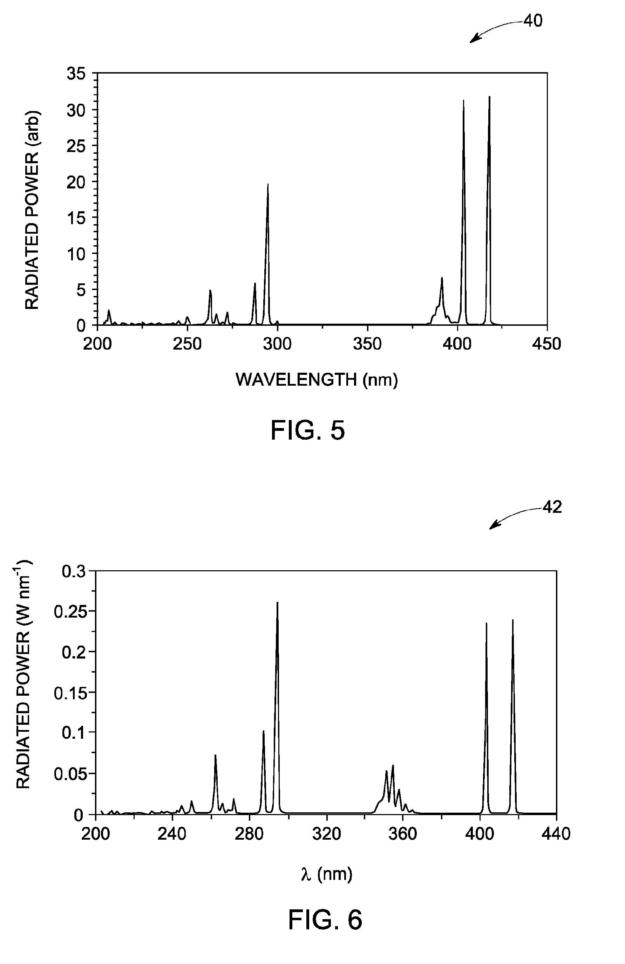

For example, in a gas discharge radiation source including gallium iodide based discharge composition, the radiation output is dominated by spectral transitions between 250 nanometers to about 294 nanometers, band at 380 nanometers to about 400 nanometers, at about 403 nanometers and another at about 417 nanometers, as shown in the emission spectra 40 of FIG. 5. In such embodiments, a suitable phosphor that absorbs radiation having at least one of these wavelengths and emits in the visible spectrum may be used.

FIG. 6 shows the emission spectra 42 of a radiation source including gallium bromide based discharge composition. As illustrated, the gallium bromide based discharge has spectral features similar to those of the gallium iodide based composition, implying that similar set of phosphors may be used with all gallium halide based discharge compositions.

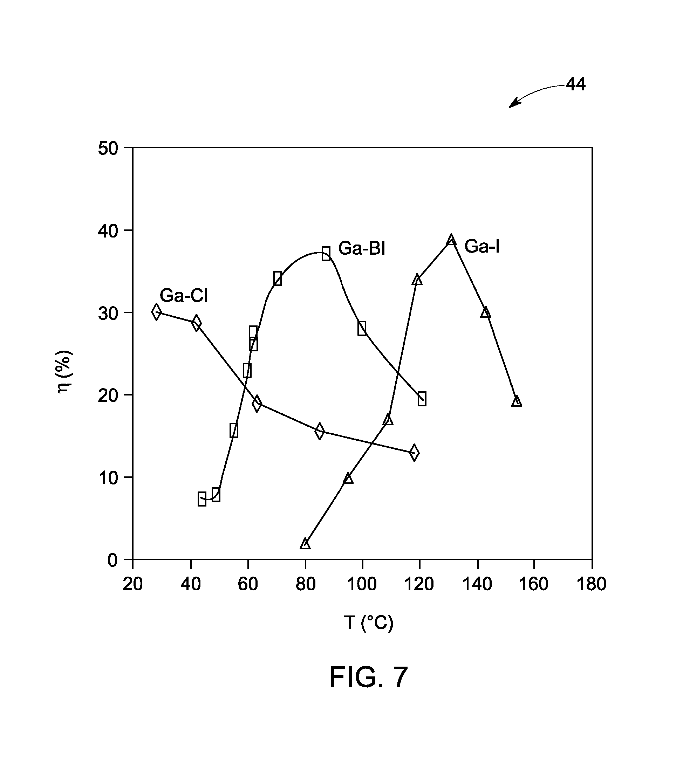

FIG. 7 shows plot 44 of variation of efficiency for different gallium halide based compositions plotted versus temperature, according to one embodiment of the invention. The plot indicates that gallium bromide based discharge compositions show high efficiency at temperatures closer to room temperature. Accordingly, Gallium bromide based discharge compositions may enable lamp operations closer to room temperature.

In one embodiment, a phosphor composition used in a discharge lamp incorporating the gallium halide discharge composition may include a phosphor blend of at least one red emitting phosphor, a green emitting phosphor, and a blue emitting phosphor. When the phosphor composition includes a blend of two or more phosphors, the ratio of each of the individual phosphors in the phosphor blend may vary depending on the characteristics of the desired light output. The composition and the ratio of the red, green, and blue emitting phosphors may be chosen to obtain maximum light output at the desired wavelength range, high temperature stability, and high color rendition. The relative proportions of the individual phosphors in the various embodiment phosphor blends may be adjusted such that their emissions are blended to give a desired color. In one embodiment, the blend is chosen to produce a white light. Color rendition or color rendering index ("CRI") is a measure of the degree of distortion in the apparent colors of a set of standard pigments when measured with the light source in question as opposed to a standard light source. CRI depends on the spectral energy distribution of the emitted light and can be determined by calculating the color shift; e.g., quantified as tristimulus values, produced by the light source in question as opposed to the standard light source. Under illumination with a lamp with low CRI, an object does not appear natural to the human eye. Thus, the better lamp sources have CRI close to 100.

In accordance with embodiments of the invention, non-limiting examples of blue emitting phosphors may include (Ba,Sr,Ca)₅(PO₄)₃(Cl,F,Br,OH):Eu²⁺, Mn²⁺, Sb³⁺, (Ba,Sr,Ca)MgAl₁₀O₁₇:Eu²⁺,Mn²⁺, (Ba,Sr,Ca)BPO₅:Eu²⁺, Mn²⁺, (Sr,Ca)₁₀(PO₄)₆*nB₂O₃:Eu²⁺, 2SrO*0.84P₂O₅*0.16B₂O₃:Eu²⁺, Sr₂Si₃O₈*2SrCl₂:Eu²⁺, Ba₃MgSi₂O₈:Eu²⁺, Sr₄Al₁₄O₂₅:Eu²⁺ (SAE), BaAl₈O_{13:}Eu²⁺, and mixtures thereof.

Non-limiting examples of green emitting phosphors may include (Ba,Sr,Ca)MgAl₁₀O₁₇:Eu²⁺,Mn²⁺ (BAMn), (Ba,Sr,Ca)Al₂O₄:Eu²⁺, (Y,Gd,Lu,Sc,La)BO₃:Ce³⁺,Tb³⁺, Ca₈Mg(SiO₄)₄Cl₂:Eu²⁺,Mn²⁺, (Ba,Sr,Ca)₂SiO₄:Eu²⁺, (Ba,Sr,Ca)₂(Mg,Zn)Si₂O₇:Eu²⁺, (Sr,Ca,Ba)(Al,Ga,In)₂S₄:Eu²⁺, (Y,Gd,Tb,La,Sm,Pr, Lu)₃(Al,Ga)₅O₁₂:Ce³⁺, (Ca,Sr)₈(Mg,Zn)(SiO₄)₄Cl₂: Eu²⁺, Mn²⁺ (CASI), Na₂Gd₂B₂O₇:Ce³⁺, Tb³⁺, (Ba,Sr)₂(Ca,Mg,Zn)B₂O₆:K,Ce,Tb, (Ba, Sr, Ca)₈M_{g}(SiO₄)₄Cl:Eu²⁺, (Ba, Sr, Ca)₈Mg(SiO₄)₄Cl₂:Eu²⁺,Mn²⁺, and Sr₄Al₁₄O₂₅:Eu²⁺, and mixtures thereof. Green emitting phosphor compositions may also be obtained in the (Ba, Sr, Ca, Mg)₂Si_{(1-δ)}O_{(4-2δ)}:Eu²⁺ compositions by choosing the proper proportions of Ba/Sr/Ca. Examples of green emitting compositions are Ba_{0.66}Ca_{0.66}Sr_{0.66}Eu_{0.02}Si_{0.96}O_{3.92}, Ba_{0.33}Ca_{0.33}Sr_{1.32}Eu_{0.02}Si_{0.96}O_{3.92} etc. The green emitting phosphors may also include (Ba,Sr,Ca,Zn,Mg)Si₂O₂₋ₓN_{2+2/3x}:Eu²⁺ (x= 0 to 1),(Ca,Sr,Ba)Si₃ON₄:Eu²⁺, and (Ca,Ba,Sr)₂Si₃O₂N₄:Eu²⁺.

Non-limiting examples of red emitting phosphors may include (Gd,Y,Lu,La)₂O3:Eu³⁺,Bi³⁺, (Gd,Y,Lu,La)₂O₂S:Eu³⁺,Bi³⁺, (Gd,Y,Lu,La)VO₄:Eu³⁺,Bi³⁺, (Ca,Sr)S:Eu²⁺,Ce³⁺, SrY₂S₄:Eu²⁺, Ce³⁺, CaLa₂S₄:Ce³⁺, (Ca,Sr)S:Eu²⁺, 3.5MgO*0.5MgF₂*GeO₂:Mn⁴⁺ (MFG), (Ba,Sr,Ca)MgP₂O₇:Eu²⁺,Mn²⁺, (Y,Lu)₂WO₆:Eu³⁺, Mo⁶⁺, (Ba,Sr,Ca)ₓSi_{y}N_{z}:Eu²⁺, Ce³⁺, (Ba,Sr,Ca,Mg)₃(Zn,Mg)Si₂O₈:Eu²⁺,Mn²⁺, (Ba, Sr, Ca, Mg, Zn)₂P₂O₇:Eu²⁺, (Ba, Sr, Ca, Mg, Zn)₂P₂O₂:Mn²⁺, (Ba, Sr, Ca, Mg, Zn)₁₀(PO₄)₆Cl₂:Eu2+, (Ba, Sr, Ca, Mg, Zn)₁₀(PO₄)₆Cl₂:Mn²⁺,(Ba,Sr,Ca,Mg)₃(Zn,Mg)Si₂O₈:Eu²⁺,Mn²⁺, and (Ba, Sr, Ca, Mg, Zn)₂(Si,In,Ga)_{(1-δ)}O_{(4-2δ)}:Eu²⁺ ,and mixtures thereof, where δ is greater than 0 and less than about 0.3. The red emitting phosphors may also include (Ba,Sr,Ca)₂Si₂N₈: Eu²⁺, (Ba,Ca,Sr)₂Si₅N₈:Eu²⁺, and BaSi₇N₁₀:Eu²⁺. The red emitting phosphor may further include (Ca,Sr,Ba)Si₃ON₄:Ln³⁺,Eu²⁺ and (Ca,Ba,Sr)₂SiO₂N₄: Ln³⁺,Eu²⁺ where Ln is a rare earth ion in the molar proportion between 0.001 and 0.10.

Further, the phosphor blend may include additional blue-green emitting or yellow-orange emitting phosphors. Examples of blue-green emitting phosphor may include, but are not limited to, Sr₄Al₁₄O₂₅:Eu²⁺, BaAl₈O₁₃:Eu²⁺, 2SrO-0.84P₂O₅-0.16B₂O₃:Eu²⁺, (Ba,Sr,Ca)MgAl₁₀O₁₇:Eu²⁺,Mn²⁺, (Ba,Sr,Ca)₅(PO₄)₃(Cl,F,OH):Eu²⁺,Mn²⁺, Sb³⁺. Examples of yellow-orange phosphor may include, but not limited to, (Sr,Ca,Ba,Mg,Zn)₂P₂O₇:Eu²⁺, Mn²⁺ (SPP); (Ca,Sr,Ba,Mg)₁₀(PO₄)₆(F,Cl,Br,OH): Eu²⁺,Mn²⁺ (HALO); (RE₁₋ₓScₓCe_{y})₂A₁₋ᵣB₂₊ᵣSi_{z-q}Ge_{q}O₁₂, where RE is selected from a lanthanide ion or Y³⁺, A is selected from Mg, Ca, Sr, or Ba, B is selected from Mg and Zn, and where 0<x≤0.1, 0<r≤1, 0<q≤3, 2.7≤z≤3.3.

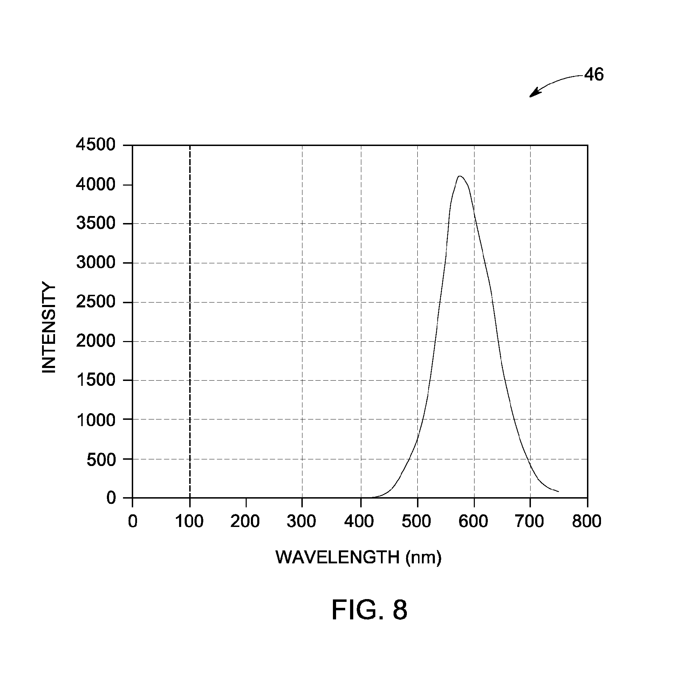

In an exemplary embodiment, the phosphor blend may include (Ba, Sr, Ca, Mg, Zn)₂(Si,Ga, In)_{(1-δ)}O_{(4-2δ)}:Eu²⁺. Discharge compositions including gallium halides show strong emission lines between 400 nanometers-425 nanometers and between 250 nanometers-300 nanometers, and a molecular band between 380 nanometers- 400 nanometers. (Ba, Sr, Ca, Mg, Zn)₂(Si,Ga, In)_{(1-δ)}O_{(4-2δ)}:Eu²⁺ shows strong absorption at all these wavelengths and exhibit substantially high quantum efficiency (compared to a stoichiometric composition (δ=0)). FIG. 8 shows the emission spectrum 46 of a typical (Ba, Sr, Ca, Mg, Zn)₂(Si, Ga, In)_{(1-δ)}O_{(4-2δ)}:Eu²⁺ phosphor composition when excited at 405 nanometers. This off-stoichoimetric phosphor (wherein δ>1) shows an improvement in quantum efficiency compared to (Ca,Ba,Sr, Mg, Zn)₂(Si, Ga, In) O₄:Eu (where δ=1). The identities and amounts of different elements in the composition may be optimized to enhance the quantum efficiency while allowing the customization of emission color. For example, the introduction of nitrogen as N³⁻ was discovered to produce a red shift. Thus, it may be possible to tune the emission characteristics of the phosphor by varying the amounts and identities of the ions in the phosphor structure. In one embodiment, (Ba, Sr, Ca, Mg, Zn)₂(Si,Ga, In)_{(1-δ)}O_{(4-2δ)}:Eu²⁺ is included along with and one or more additional phosphors, preferably at least a blue emitting and a green emitting phosphor. The relative amounts of each phosphor in the phosphor blend may be described in terms of spectral weight. The spectral weight is the relative amount that each phosphor contributes to the overall emission spectra of the phosphor blend. The spectral weight amounts of all the individual phosphors should add up to 1. In one embodiment, each of the phosphors in the blend may have a spectral weight ranging from about 0.01 to 0.8.

The above described phosphor compositions may be produced using known solution or solid state reaction processes for the production of phosphors by combining, for example, elemental oxides, carbonates and/or hydroxides as starting materials. Other starting materials may include nitrates, chlorides, sulfates, acetates, citrates, or oxalates. Alternately, co-precipitates of the rare earth oxides could be used as the starting materials for the RE elements. In a typical process, the starting materials are combined via a dry or wet blending process and fired in air or under a reducing atmosphere or in ammonia at from, e.g., 1000°C to 1600°C.

A fluxing agent may be added to the mixture before or during the step of mixing. This fluxing agent may be NH₄Cl or any other conventional fluxing agent, such as CaF₂, boric acid, borates, and the like. A quantity of a fluxing agent of less than about 20, preferably less than about 5, percent by weight of the total weight of the mixture is adequate for fluxing purposes. When using fluxes, some of their ions can be incorporated into the phosphor material and become part of its formula.

The starting materials may be mixed together by any mechanical method including, but not limited to, stirring or blending in a high-speed blender or a ribbon blender. The starting materials may be combined and pulverized together in a bowl mill, a hammer mill, or a jet mill. The mixing may be carried out by wet milling especially when the mixture of the starting materials is to be made into a solution for subsequent precipitation. If the mixture is wet, it may be dried first before being fired under a reducing atmosphere at a temperature from about 900°C to about 1700°C, more preferably from 1100°C to 1400°C, for a time sufficient to convert all of the mixture to the final composition.

The firing may be conducted in a batch-wise or continuous process, preferably with a stirring or mixing action to promote good gas-solid contact. The firing time depends on the quantity of the mixture to be fired, the rate of gas conducted through the firing equipment, and the quality of the gas-solid contact in the firing equipment. The reducing atmosphere typically comprises a reducing gas such as hydrogen, carbon monoxide, ammonia or a combination thereof, optionally diluted with an inert gas, such as nitrogen, argon, etc., or a combination thereof. Alternatively, the crucible containing the mixture may be packed in a second closed crucible containing high-purity carbon particles and fired in air so that the carbon particles react with the oxygen present in air, thereby, generating carbon monoxide for providing a reducing atmosphere.

These compounds may be blended and dissolved in a nitric acid solution. The strength of the acid solution is chosen to rapidly dissolve the oxygen-containing compounds and the choice is within the knowledge of a person skilled in the art. Ammonium hydroxide is then added in increments to the acidic solution. An organic base such as methylamine, ethylamine, dimethylamine, trimethylamine, or the like may be used in place of ammonium hydroxide.

The precipitate is typically filtered, washed with deionized water, and dried. The dried precipitate is ball milled or otherwise thoroughly blended and then calcined in air at about 400°C to about 1600°C for a sufficient time to ensure a substantially complete transformation of the starting material. The calcination may be carried out at a constant temperature. Alternatively, the calcination temperature may be ramped from ambient to and held at the final temperature for the duration of the calcination. The calcined material is similarly fired at temperatures between 1000°C and 1600°C for a sufficient time under a reducing atmosphere such as H₂, CO, or a mixture of one of these gases with an inert gas, or an atmosphere generated by a reaction between charcoal and the products of the decomposition of the starting materials or using ammonia gas to covert all of the calcined material to the desired phosphor composition.

Alternatively, a sol-gel synthesis may also be used to produce the phosphors composition of the present invention. Thus, in an exemplary process, a phosphor for use in the present invention may be made by first combining predetermined amounts of appropriate oxide compounds and wetting them with water. Dilute nitric acid is then added to dissolve the oxide and carbonates. The solution is then dried to remove excess nitric acid and then dissolved in absolute ethanol. In a second container, a predetermined amount of tetraethyl orthosilicate (TEOS) is dissolved in absolute ethanol. The contents of the two containers are then combined and stirred under heat until gelling occurs. The gel is subsequently heated in an oven to remove organics, ground to a powder, and then calcined at temperatures between 800°C and1200°C. Finally, the powder may be ground again and further calcined in reducing atmosphere at temperatures between 1100°C and 1400°C for 4 to 10 hours. Similar procedures can be used for the other described phosphor compositions.

In one exemplary embodiment, there is provided a mercury-free discharge lamp including a mercury-free discharge composition based on gallium halide, and a phosphor blend including the above described (Ba, Sr, Ca, Mg, Zn)₂(Si,Ga, In)_{(1-δ)}O₍₄-_{2δ)}:Eu²⁺ phosphor, and one or more of blue emitting, and a green emitting phosphors.

### EXAMPLE 1

A cylindrical quartz discharge envelope, which is transparent to UV-A radiation (radiation having wavelength in the range of 320-400 nm), having a length of about 35 cm, and a diameter of about 2.5 cm, was provided. The discharge envelope was evacuated and a dose of about 0.6 mg Ga and about 8.2 mg GaI₃, and argon were added. The pressure of argon was about 267 Pa at ambient temperature. The envelope was inserted into a furnace and power was capacitively-coupled into the gas medium via external copper electrodes at an excitation frequency of about 13.56 MHz. Radiative emission and radiant efficiency were measured. The ultraviolet and visible output power was estimated to be about 30 percent of the input electrical power at about 110°C. When the ultraviolet radiation is converted to visible light by a suitable phosphor blend, the luminous efficacy is estimated to be about 80 lumens per Watt.

### EXAMPLE 2

A cylindrical quartz discharge envelope, which is transparent to UV-A radiation (radiation having wavelength in the range of 320-400 nm), having a length of about 35 cm, and a diameter of about 2.5 cm, was provided. The discharge envelope was evacuated and a dose of about 3.0 mg Ga and about 3.7 mg GaI₃ and argon were added. The pressure of argon was about 267 Pa at ambient temperature. The envelope was inserted into a furnace and power was capacitively-coupled into the gas medium via external copper electrodes at an excitation frequency of about 13.56 MHz. Radiative emission and radiant efficiency were measured. The ultraviolet and visible output power was estimated to be about 32 percent of the input electrical power at about 220°C. When the ultraviolet radiation is converted to visible light by a suitable phosphor blend, the luminous efficacy is estimated to be about 80 lumens per watt.

While various embodiments are described herein, it will be appreciated from the specification that various combinations of elements, variations, equivalents, or improvements therein are foreseeable, may be made by those skilled in the art, and are still within the scope of the invention as defined in the appended claims.

## Claims

1. A mercury-free discharge lamp (20) comprising:
an envelope (22);
an ionizable discharge composition comprising gallium contained by the envelope (22); and
a phosphor composition contained by the envelope (22) and in communication with the ionizable discharge composition.

2. The mercury-free discharge lamp (20) of claim 1, wherein the mercury-free discharge lamp (10) has a total equilibrium operating pressure of less than about 100,000 Pascals.

3. The mercury-free discharge lamp (20) of claim 1, wherein the ionizable discharge composition comprises gallium and a halogen.

4. The mercury-free discharge lamp (20) of claim 3, wherein the molar ratio of gallium to halogen ranges from about 1:3 to about 1:2.

5. The mercury-free discharge lamp (20) of claim 3, wherein the halogen is selected from the group consisting of iodine, chlorine, and bromine, or combinations thereof.

6. The mercury-free discharge lamp (20) of claim 1, wherein the mercury-free discharge lamp further comprises an inert buffer gas.

7. The mercury-free discharge lamp (20) of claim 1, wherein the phosphor composition comprises a blend of a red phosphor, a green phosphor, and a blue phosphor.

8. The mercury-free discharge lamp (20) of claim 7, wherein the red phosphor is selected from the group consisting of (Ba, Sr, Ca, Mg, Zn)₂P₂O₇:Eu²⁺, (Ba, Sr, Ca, Mg, Zn)₂P₂O₇:Mn²⁺, (Ba, Sr, Ca, Mg, Zn)₁₀(PO₄)₆Cl₂:Eu²⁺, (Ba, Sr, Ca, Mg, Zn)₁₀(PO₄)₆Cl₂:Mn²⁺, MgF:Mn⁴⁺, and (Ba, Sr, Ca, Mg)₂Si_{1-δ}O_{δ}:Eu²⁺, wherein δ is greater than 0 and less than about 0.5.

9. The mercury-free discharge lamp (20) of claim 7, wherein the green phosphor is selected from the group consisting of (Ba, Sr, Ca)₈M_{g}(SiO₄)₄Cl₂:Eu²⁺, (Ba, Sr, Ca)₈Mg(SiO₄)₄Cl₂:Mn²⁺, and Sr₄Al₁₄O₂₅:Eu²⁺.

10. The mercury-free discharge lamp (20) of claim 7, wherein the blue phosphor is selected from the group consisting of (Ba, Sr, Ca) MgAl₁₀O₁₇:Eu²⁺, and (Ba, Sr, Ca, Mg)₅PO₄Cl:Eu²⁺.

11. An ionizable mercury-free discharge composition comprising gallium and a halogen, the composition being capable of emitting radiation if excited, and the ionizable mercury-free discharge composition producing a total equilibrium operating pressure less than about 100,000 Pascals if excited.

12. A mercury-free discharge lamp (20) comprising the ionizable mercury-free discharge composition of claim 11.
